# FASCICULE DE BREVET EUROPEEN

(11) **EP 1 419 338 B1**
(45) Date de publication et mention de la délivrance du brevet: **26.01.2005**
(21) Numéro de dépôt: 02794813.2
(22) Date de dépôt: 14.08.2002
(51) Int. Cl.: F16L 11/08

(54) **RUBAN TEXTILE PLAT POUR FORMER UNE COUCHE D'UNE CONDUITE FLEXIBLE DE TRANSPORT D'HYDROCARBURE ET CONDUITE AINSI FORMEE**
EINE LAGE EINES FÜR KOHLENWASSERSTOFFTRANSPORT VERWENDETEN FLEXIBLEN KANALS BILDENDER FLACHER TEXTILSTREIFEN UND SO HERGESTELLTER KANAL
FLAT TEXTILE STRIP FORMING ONE LAYER OF A FLEXIBLE DUCT THAT IS USED FOR HYDROCARBON TRANSPORT AND THE DUCT THUS FORMED

(30) Priorité: 14.08.2001 FR 0110818
(43) Date de publication de la demande: 19.05.2004
(73) Titulaire: Technip France, 92400 Courbevoie (FR)
(72) Inventeur: GEREZ, Jean-Michel, F-75015 Paris (FR); DIEUMEGARD, Christophe, 78600 Maisons-Laffitte (FR)
(74) Mandataire: Bertrand, Didier
(86) Numéro de dépôt international: PCT/FR2002/002876
(87) Numéro de publication internationale: WO 2003/016770

(56) Documents cités:
- EP-A- 0 853 547
- US-A- 2 129 110
- PATENT ABSTRACTS OF JAPAN vol. 008, no. 136 (M-304), 23 juin 1984 (1984-06-23) & JP 59 035924 A (TOUKIYOU SHIKAN KK), 27 février 1984 (1984-02-27) cité dans la demande

## Description

La présente invention concerne un ruban plat destiné à la fabrication d'une couche d'une conduite flexible de transport d'hydrocarbures et de gaz sous l'eau, notamment une conduite flexible non liée de type offshore telle que définie dans les recommandations API 17B et 17J de l'American Petroleum Institute.

De telles conduites sont constituées de couches non liées entre elles, pour partie métalliques et pour, partie polymériques. Ces conduites comportent au moins une gaine polymérique de pression entourée d'une voûte de pression, réalisée au moins en partie par enroulement hélicoïdal d'éléments métalliques allongés laissant entre leurs spires un léger jeu appelé "déjoint" (généralement au moins une couche d'éléments métalliques allongés, notamment des fils de forme, enroulés à pas court) et une ou plusieurs nappes d'éléments de renforcement enroulés à pas long

L'un des problèmes rencontrés dans la pratique est le fluage de la gaine de pression dans les déjoints existants entre les spires de la voûte de pression. Ce fluage s'effectue sous l'effet combiné de la pression interne et de la température du fluide transporté dans la conduite. En fonction de l'effluent et de sa température, les gaines plastiques utilisées peuvent être réalisées dans des matériaux par exemple de type polyfluorure de vinylidène "PVDF" (par exemple les revêtements connus sous les marques Coflon ® et Gammaflex ®, pour les applications aux températures relativement hautes, typiquement supérieure à 80 °C). Ces matériaux ont tendance à fluer de manière relativement importante dans les déjoints de la voûte. Ce fluage conduit à la formation de tétons de fluage au niveau des déjoints.

Dans les applications dynamiques, telle qu'en "riser" (colonne montante), ces tétons sont une source d'amorce de rupture en raison des mouvements des spires de la voûte qui tendent à cisailler ces tétons.

Une solution couramment utilisée pour tenter de résoudre les problèmes de fluage est la réalisation de couches anti-fluage telles que décrites dans le document FR 2 743 614, qui couvre l'embout spécifique de telles conduites. Ces couches sont coûteuses en termes de matières premières mais également en termes de coûts de production.

Une autre solution envisagée pour résoudre ce problème pourrait consister à utiliser un ruban classique enroulé à pas court autour de la gaine de pression, le ruban étant destiné à empêcher le fluage de ladite gaine. Toutefois, cette solution est excessivement difficile à mettre en oeuvre pour les raisons suivantes.

Le chevauchement d'un ruban à fibre unidirectionnelle lors du rubannage à pas court provoquerait une surcontrainte dans les fibres au niveau de la partie chevauchante entraînant une forte déchéance dans les fibres, allant jusqu'à la rupture au niveau du bord du ruban. Une telle rupture provoquerait alors la destruction de bande qui ne remplirait plus sa fonction d'anti-fluage. Pour éviter ces chevauchements, il serait nécessaire de poser le ruban unidirectionnel bord à bord, c'est-à-dire sans jeu. Toutefois, rubaner un ruban sans jeu est quasiment impossible en raison : de la précision des rubaneuses existantes (réglage de pas, variation de la tension dans la bande posée entraînant une variation de largeur de la bande), de la géométrie de la conduite (tolérance sur le diamètre), de la flèche de la conduite (forme légèrement bombée de la conduite sous son poids propre lors des opérations de rubanage au niveau de la rubaneuse), etc.

Le but de l'invention est de proposer un ruban permettant de résoudre les problèmes ci-dessus et permettant de gérer les jeux d'enroulement de manière satisfaisante et de parvenir à un rubannage satisfaisant pour obtenir une couche destinée à empêcher le fluage de la gaine qu'elle recouvre, ou pour réaliser d'une manière plus générale d'autres enroulements constituant une couche d'une conduite.

L'invention atteint son but grâce à un ruban textile plat, destiné à réaliser, par enroulement hélicoïdal, une couche d'une conduite flexible de transport d'hydrocarbures servant à véhiculer, notamment sous l'eau, un fluide sous pression, la conduite étant constituée de couches non liées pour partie métalliques et/ou en matériaux composites et pour partie polymériques, caractérisé en ce que le ruban textile utilisé pour réaliser ces enroulements est un ruban comportant des bords amincis sur une certaine largeur de manière à autoriser un chevauchement des bords amincis qui n'entraîne pas de surépaisseur notable. Autrement dit, le ruban est constitué d'une section centrale à section sensiblement rectangulaire et de deux bords longitudinaux plus minces que la section centrale. Avantageusement, l'épaisseur des bords est uniforme et égale sensiblement à la moitié de l'épaisseur de la section centrale ; leur largeur est avantageusement comprise entre 5% et 15% de la largeur de la section centrale, et de préférence au voisinage de 10%.

L'amincissement des bords en recouvrement est connu en soi, dans des domaines très éloignés de l'invention, par exemple dans les assemblages de planches à clin ou par le document JP 59035924 qui décrit une bande en résine multicouche destinée à former un tube transparent qui sera ensuite sectionné pour former des conteneurs. La bande est réalisée avec un amincissement des bords latéraux et est enroulée sans jeu sur elle-même avec soudage des bords. Il s'agit de la bande constitutive du tube lui-même mais nullement d'une bande constituant une simple couche d'une conduite flexible pour hydrocarbures, comportant des couches métalliques et des couches polymériques. De plus, la bande est en résine homogène et non un ruban textile dont le mode de fabrication est totalement différent.

Avantageusement, le ruban est constitué par une seule épaisseur de mèche filamentaires de dimensions différentes dans la partie centrale et dans les bords.

Avantageusement, le ruban est muni de traceur dans la zone de frontière entre la partie centrale et les bords de manière à pouvoir contrôler visuellement la qualité de l'enroulement et du chevauchement des bords.

L'invention vise également la conduite flexible pour hydrocarbures dont au moins une couche est obtenue par l'enroulement de rubans textiles plats conformes à l'invention.

Il s'agit notamment d'une conduite flexible pour hydrocarbures de type offshore non liée et le ruban peut être utilisé comme suggéré plus haut pour réaliser une bande anti-fluage, entre la gaine de pression et la voûte de pression, en particulier pour les applications de type dynamique (pour les colonnes montantes) et essentiellement pour des conduites de production (dans lesquelles un fluide chaud circule) qui conduisent à l'utilisation de gaines en polymère semi-cristallin, avec les problèmes de fluage et de rupture que cela entraîne et qui ont été déjà évoqués. L'invention s'applique tout particulièrement aux conduites dites "rough bore" (à passage non lisse), qui sont principalement utilisées en production, mais également aux conduites dites "smooth bore" (à passage lisse, la carcasse interne étant recouverte d'une gaine intérieure), notamment dans les conduites dites "kill and choke line" qui sont des raccords flexibles ("jumpers") de faibles diamètres situés au niveau des plates-formes.

Dans l'utilisation en couche anti-fluage, on pose généralement plusieurs couches de ruban pour obtenir la quantité de fibres nécessaire à la pression de fluage de la gaine (les couches étant décalées). L'enroulement hélicoïdal se fait de préférence à pas court. La largeur du ruban peut être quelconque mais il est préférable d'utiliser des rubans larges pour des raisons évidentes de couverture et de fabrication.

Le ruban textile selon l'invention peut recevoir d'autres applications et constituer par exemple une ou plusieurs couches de renfort enroulées à pas court autour des nappes d'armure de traction de la conduite pour empêcher leur gonflement dû à l'effet de fond inverse (raccourcissement de la conduite due à la pression hydrostatique externe entraînant une compression dans les fils d'armure).

D'autres caractéristiques et avantages de l'invention apparaîtront à la lecture de la description suivante de plusieurs exemples de réalisation, se référant aux dessins annexés sur lesquels :
- la figure 1 est une vue en perspective d'une conduite comportant des couches anti-fluage réalisées par l'enroulement d'un ruban conforme à l'invention,
- la figure 2 est une vue en perspective d'un premier mode de réalisation de ruban plat conforme à l'invention,
- les figures 3 et 4 sont des vues en coupe d'un second et d'un troisième modes de réalisation de ruban plat conforme à l'invention,
- la figure 5 est une vue en coupe d'un enroulement de ruban du deuxième mode de réalisation, montrant le chevauchement des bords,
- la figure 6 est une vue en coupe d'un quatrième mode de réalisation de l'invention,
- la figure 7 est une vue en perspective d'une conduite classique de transport d'hydrocarbures à laquelle l'invention s'applique.

La constitution classique d'une conduite flexible non liée de transport d'hydrocarbure sera d'abord rappelée en référence à la figure annexée 7 qui représente une conduite de type "rough bore" qui comprend, de l'intérieur vers l'extérieur : une carcasse métallique 101, généralement réalisée par un feuillard agrafé enroulé hélicoïdalement autour de l'axe AA de la conduite et destinée à la résistance à l'écrasement sous pression externe ; une gaine d'étanchéité interne polymérique 102 dite gaine de pression, une voûte de pression métallique 111, constituée ici de manière traditionnelle par l'enroulement en hélice à pas court (angle d'enroulement généralement proche de 90° par rapport à l'axe de la conduite) d'un fil métallique de forme agrafé 103 doublé, si nécessaire, par l'enroulement en hélice à pas court d'un fil de frette 104, une armure 105 résistant à la traction axiale dans le sens longitudinal de la conduite et classiquement constituée d'une ou plusieurs paires de nappes croisées 109, 110 d'enroulement à pas long (typiquement moins de 60° par rapport à l'axe de la conduite), et d'une gaine d'étanchéité externe polymérique 108. D'autres couches intermédiaires telles que les couches 106, 107 peuvent être prévues selon le type et la destination de la conduite. De même, certaines couches peuvent être absentes selon l'application pour laquelle est prévue la conduite. Dans le cas d'une conduite "smooth bore", la gaine d'étanchéité ou gaine de pression constitue l'élément le plus interne de la conduite. L'enroulement du fil de forme 103, formant la voûte située au-dessus de la gaine de pression, quelle que soit sa forme, laisse entre les spires un certain déjoint permettant la flexion de la conduite.

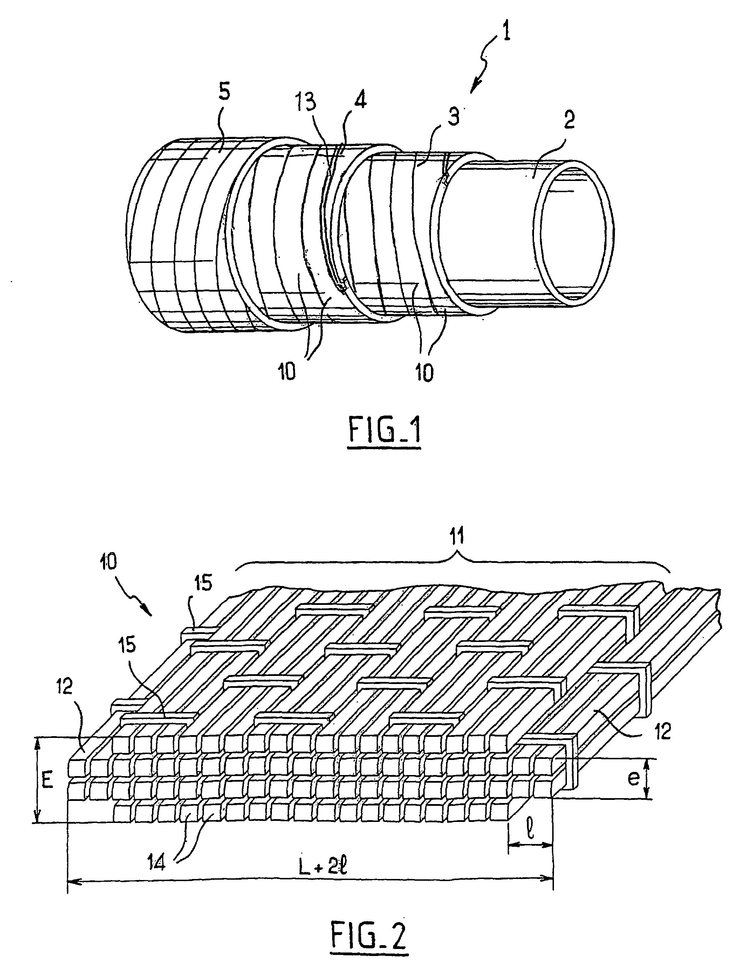

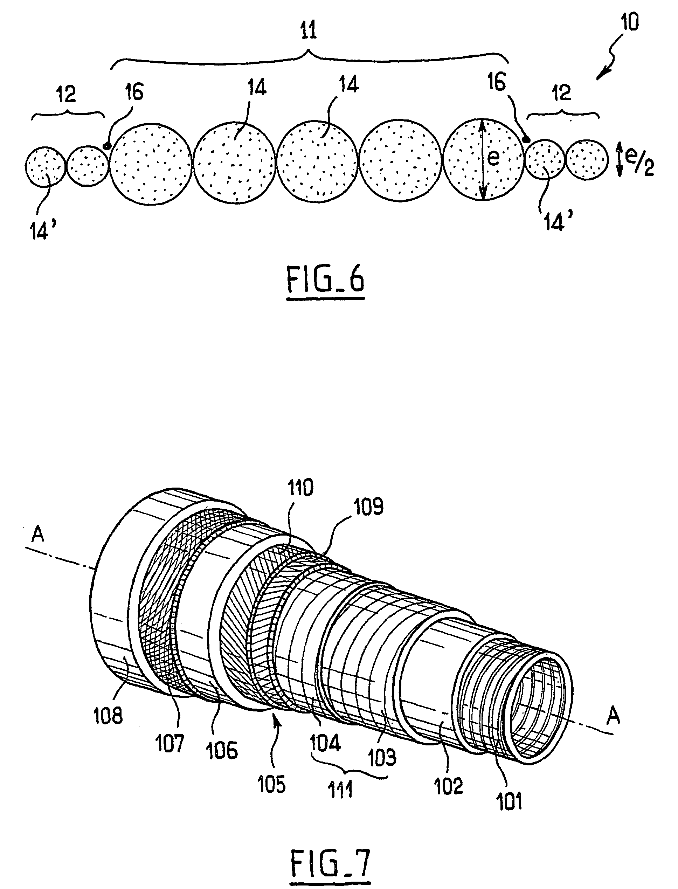

La figure 1 montre un exemple d'application de l'invention à la réalisation d'une couche anti-fluage. On y voit, très symboliquement représentée, une conduite 1 de transport de fluides sous pression, constituée de la gaine de pression 2 (analogue à la couche 102) et une voûte de pression 5 (analogue à la couche 103), les autres couches de la conduite (carcasse, armures, gaines externes) ayant été omises pour la clarté du dessin. Entre la gaine de pression 2 et la voûte de pression 5, on a disposé une première nappe 3 et une seconde nappe 4 de ruban textile selon l'invention, destinées à empêcher le fluage de la couche 2 dans les déjoints de la voûte 4. Les nappes anti-fluage 3 et 4 sont réalisées par enroulement à pas court d'un ruban plat 10 conforme à l'invention, avec un angle de pose typiquement supérieur à 70°, voire 80°, par rapport à l'axe longitudinal de la conduite. Comme on le voit sur la figure 5, le chevauchement des bords des spires adjacentes de rubans 10 empêche la formation de jeux traversants dans la couche obtenue.

Les figures 2 à 4 montrent trois modes de réalisation dé ruban qui différent par la disposition des bords minces. Pour des raisons de clarté des dessins, la largeur des bords par rapport à celle de la section centrale du ruban a été exagérée sur les dessins.

Le ruban 10 de l'invention, de largeur moyenne L+ℓ, est constitué d'une section centrale 11 à section rectangulaire, de largeur L et d'épaisseur E, encadrée latéralement par deux bords ou ailes longitudinales 12, de largeur ℓ et d'épaisseur e. On a de préférence e = E/2 et L/20 < ℓ < 3L/20.

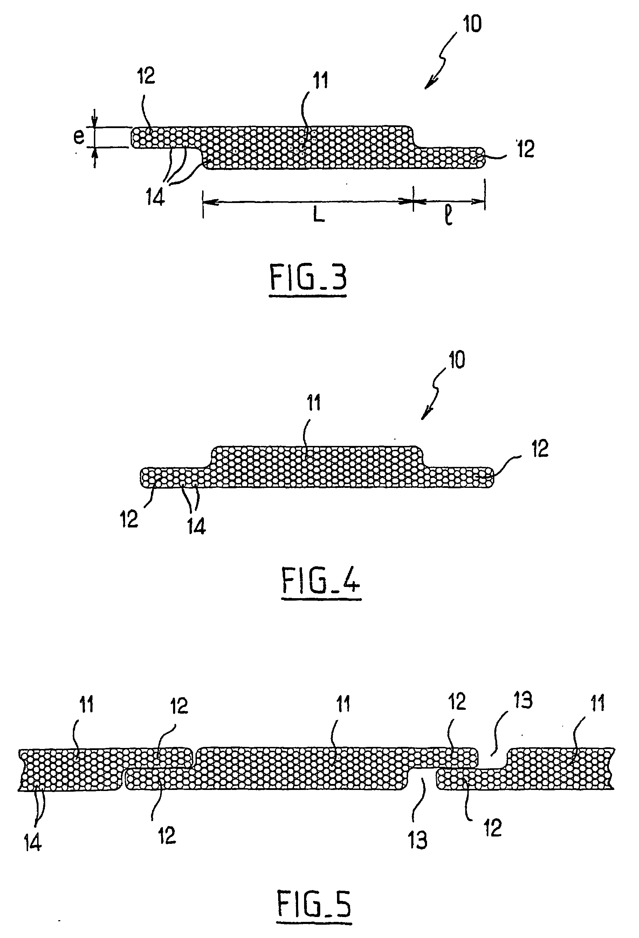

Les ailes 12 peuvent être disposées à mi-hauteur des bords de la section centrale 11 (figure 2), de façon alternée en haut et bas des deux bords de la section centrale 11 (figures 3 et 5) ou exclusivement en bas (ou en haut) des deux bords de la section centrale 11, ou selon toute autre disposition. Bien que la disposition des figures 3 et 5 soit celle qui se prête le plus naturellement au recouvrement des bords 12, les autres dispositions conviennent en pratique, compte tenu de la souplesse du ruban et de sa déformation lors de l'enroulement.

Comme le montre la figure 2, et plus schématiquement les figures 3 à 5, le ruban de l'invention est un ruban textile formé de couches de mèches filamentaires 14 maintenues par des moyens de contention 15. Il est par exemple constitué conformément à l'enseignement du document EP 0 85 3 547 de couches de mèches filamentaires 14 agglomérées les unes aux autres et maintenues par des moyens de contention 15 et une matière de liage de manière à maintenir une compacité globale forte, par exemple d'au moins 39%. La matière de liage, par exemple une matière thermoplastique revêtant les mèches filamentaires n'est pas représentée..Toutefois, le ruban peut également être constitué uniquement d'un tissage de mèches filamentaires par un fil de trame sans matière de liage. Dans le cas d'un ruban tissé sans matière de liage, la compacité est avantageusement maintenue importante, par exemple d'au moins 39%. Les mèches filamentaires 14 utilisées en fil de chaîne peuvent être de tout type tel qu'en aramide (Kevlar®, Twaron ®, Technora ®) ou en carbone par exemple. Les bords 12 sont constitués de la même matière que la section centrale, sur une épaisseur moindre simplement, donc par exemple avec un nombre inférieur de couches de mèches filamentaires. Il est avantageux, selon l'invention, d'espacer les moyens de contention (fils de trame) de manière à permettre lors de la flexion de la conduite aux rubans enroulés de se distordre et à leurs fibres longitudinales de se réorganiser. Selon une alternative, les bords peuvent être réalisés à partir de fibres présentant des caractéristiques physiques ou chimiques différentes de celles de la partie centrale. En particulier, on pourra utiliser des fibres dont l'allongement à la rupture est supérieur à celui des fibres utilisées dans la partie centrale. On pourra également utiliser des fibres présentant une modification de la nature ou du degré de torsion des mèches filamentaires utilisées, ou une compacité différente.

Comme l'illustre la figure 5, le ruban 10 de l'invention permet d'accommoder le jeu global lors du rubanage en chevauchant au moins partiellement les bords 12 des rubans adjacents. Ce chevauchement au moins partiel des bords 12 empêche la formation de déjoints traversants (sur toute l'épaisseur de la couche de renforcement) entre deux bandes. Il ne se forme que tout au plus un jeu 13 inférieur à la largeur ℓ du bord et qui n'est pas traversant. Sur la figure 1, ce jeu 13 a été représenté uniquement pour la première spire.

Le mode de réalisation du ruban 10 de la figure 6 diffère de celui de la figure 2 en ce qu'au lieu d'être réalisé par plusieurs épaisseurs de mèches filamentaires, il n'est réalisé que par un tissage sur deux dimensions (fils de trame, fils de chaîne), avec une seule épaisseur de mèches filamentaires 14, 14'. Les mèches 14 de la partie centrale 11 sont de dimensions plus importantes que les mèches 14' des parties de bord mince 12.

Il est également avantageux de prévoir sur le ruban 10 un traceur, par exemple un fil de couleur 16, qui permet de visualiser la localisation du ruban lors de l'enroulement. Ce fil 16 est placé avantageusement entre le bord 12 et la partie centrale 11 du ruban 10 (on ne l'a illustré que sur la figure 6, mais il peut s'adapter à tous les modes de réalisation) pour matérialiser l'interface. Ainsi, il est possible de contrôler visuellement qu'aucun bord 12 de ruban ne chevauche une partie centrale 11 de ruban (il doit toujours y avoir deux traceurs 16 côte à côte ; aucun traceur 16 ne doit être recouvert si l'enroulement est correctement réalisé).

On n'a représenté en détail que l'application à la réalisation d'une couche anti-fluage située entre gaine de pression et voûte de pression de la conduite, mais le ruban conforme à l'invention peut servir à réaliser d'autres couches d'une conduite, notamment une couche de renfort enroulée autour d'une nappe d'armures 109, 110 de la conduite représentée en figure 7, ou entre ces nappes 109,110.

## Revendications

1. Ruban textile plat, destiné à réaliser, par enroulement hélicoïdal, une couche d'une conduite flexible de transport d'hydrocarbures servant à véhiculer, notamment sous l'eau, un fluide sous pression, la conduite étant constituée de couches non liées pour partie métalliques et/ou en matériau composite et pour partie polymériques,
**caractérisé en ce que** le ruban (10) est constitué d'une section centrale (11) à section sensiblement rectangulaire et de deux bords longitudinaux (12) plus minces que la section centrale.

2. Ruban selon la revendication 1, **caractérisé en ce que** l'épaisseur des bords longitudinaux (12) est sensiblement égale à la moitié de l'épaisseur de la section centrale (11).

3. Ruban selon l'une quelconque des revendications précédentes, **caractérisé en ce que** la largeur des bords (12) est comprise entre 5% et 15% de la largeur de la section centrale (11).

4. Ruban selon l'une quelconque des revendications précédentes, **caractérisé en ce que** la compacité du ruban est égale ou supérieure à 39 %.

5. Ruban selon l'une quelconque des revendications précédentes, **caractérisé en ce qu'**il est constitué de mèches filamentaires assemblées par des moyens de contention et une matière de liage thermoplastique.

6. Ruban selon l'une quelconque des revendications 1 à 5, **caractérisé en ce qu'**il est constitué par une seule épaisseur de mèche filamentaires (14, 14') de dimensions différentes dans la partie centrale (11) et dans les bords (12).

7. Ruban selon l'une quelconque des revendications 1 à 6, **caractérisé en ce que** le ruban (10) est muni de traceur (16) dans la zone de frontière entre la partie centrale (11) et les bords (12).

8. Conduite de transport d'hydrocarbures servant à véhiculer, notamment sous l'eau, un fluide sous pression, la conduite étant constituée de couches non liées pour partie métalliques et/ou en matériau composite et pour partie polymériques, la conduite comportant au moins une couche constituée par un enroulement hélicoïdal d'un ruban textile plat (10), **caractérisée en ce que** le ruban (10) est constitué d'une section centrale (11) à section sensiblement rectangulaire et de deux bords longitudinaux (12) plus minces que la section centrale, le ruban (10) étant enroulé avec recouvrement au moins partiel des bords latéraux (12).

9. Conduite selon la revendication 8, **caractérisée en ce que** l'angle de pose des rubans (10) est typiquement supérieur à 70°, voire à 80°.

10. Conduite selon l'une quelconque des revendications 8 ou 9, **caractérisée en ce que** les bords (12) du ruban (10) sont réalisés à partir de fibres présentant des caractéristiques physiques ou chimiques différentes de celles de la partie centrale (11).

11. Conduite selon l'une quelconque des revendications 8 à 10, qui comprend une gaine de pression (2) et une voûte de pression (5), **caractérisée en ce que** la couche réalisée en ruban (10) est une couche anti-fluage enroulée entre la gaine de pression (2) et la voûte de pression (5) de la conduite (1).

12. Conduite selon l'une quelconque des revendications 8 à 10, **caractérisée en ce que** la couche réalisée en ruban (10) est une couche de renfort enroulée autour d'une nappe d'armures (109, 110) de la conduite ou entre les nappes d'armure (109, 110).

## Patentansprüche

1. Flaches Textilband, das dazu bestimmt ist, durch schraubenlinienförmiges Wickeln eine Schicht einer flexiblen Kohlenwasserstofftransport-Rohrleitung zu schaffen, die dazu dient, insbesondere unter Wasser ein unter Druck stehendes Fluid zu befördern, wobei die Rohrleitung aus nicht verbundenen Schichten gebildet ist, die zum Teil aus Metallen und/oder Verbundwerkstoffen und zum Teil aus Polymeren bestehen,
**dadurch gekennzeichnet, dass** das Band (10) aus einem Mittelabschnitt (11) mit einem im Wesentlichen rechtwinkligen Querschnitt und aus zwei longitudinalen Rändern (12), die dünner als der Mittelabschnitt sind, gebildet ist.

2. Band nach Anspruch 1, **dadurch gekennzeichnet, dass** die Dicke der longitudinalen Ränder (12) im Wesentlichen gleich der halben Dicke des mittleren Abschnitts (11) ist.

3. Band nach einem der vorhergehenden Ansprüche, **dadurch gekennzeichnet, dass** die Breite der Ränder (12) im Bereich von 5 % bis 15 % der Breite des mittleren Abschnitts (11) liegt.

4. Band nach einem der vorhergehenden Ansprüche, **dadurch gekennzeichnet, dass** die Kompaktheit des Bandes gleich oder größer als 39 % ist.

5. Band nach einem der vorhergehenden Ansprüche, **dadurch gekennzeichnet, dass** es aus Filamentvorgarnen gebildet ist, die durch Fixierungsmittel und ein Material zur thermoplastischen Bindung zusammengefügt sind.

6. Band nach einem der Ansprüche 1 bis 5, **dadurch gekennzeichnet, dass** es durch eine einzige Lage eines Filamentvorgarns (14, 14') mit unterschiedlichen Abmessungen im Mittelteil (11) und in den Rändern (12) gebildet ist.

7. Band nach einem der Ansprüche 1 bis 6, **dadurch gekennzeichnet, dass** das Band (10) in der Grenzzone zwischen dem Mittelteil (11) und den Rändern (12) mit einem Indikator (16) versehen ist.

8. Kohlenwasserstofftransport-Rohrleitung, die dazu dient, insbesondere unter Wasser ein unter Druck stehendes Fluid zu befördern, wobei die Rohrleitung aus nicht verbundenen Schichten gebildet ist, die zum Teil aus Metallen und/oder Verbundmaterialien und zum Teil aus Polymeren bestehen, wobei die Rohrleitung wenigstens eine Schicht enthält, die durch schraubenlinienförmiges Wickeln eines flachen Textilbandes (10) gebildet ist, **dadurch gekennzeichnet, dass** das Band (10) aus einem mittleren Abschnitt (11) mit einem im Wesentlichen rechtwinkligen Querschnitt und aus zwei longitudinalen Rändern (12), die dünner als der mittlere Abschnitt sind, gebildet ist, wobei das Band (10) wenigstens mit einer Teilüberdeckung der Seitenränder (12) gewickelt ist.

9. Leitung nach Anspruch 8, **dadurch gekennzeichnet, dass** der Anordnungswinkel der Bänder (10) typischerweise größer als 70°, eventuell sogar größer als 80° ist.

10. Leitung nach einem der Ansprüche 8 oder 9, **dadurch gekennzeichnet, dass** die Ränder (12) des Bandes (10) aus Fasern gebildet sind, die physikalische oder chemische Eigenschaften besitzen, die von jenen des mittleren Teils (11) verschieden sind.

11. Leitung nach einem der Ansprüche 8 bis 10, die eine Druckhülle (2) und ein Druckgewölbe (5) umfasst, **dadurch gekennzeichnet, dass** die aus einem Band (10) verwirklichte Schicht eine Antikriechschicht ist, die zwischen die Druckhülle (2) und das Druckgewölbe (5) der Rohrleitung (1) gewickelt ist.

12. Leitung nach einem der Ansprüche 8 bis 10, **dadurch gekennzeichnet, dass** die aus einem Band (10) verwirklichte Schicht eine Verstärkungsschicht ist, die um eine Armierungslage (109, 110) der Rohrleitung oder zwischen Armierungslagen (109, 110) gewickelt ist.

## Claims

1. A flat textile tape, intended to produce, by helical winding, one layer of a flexible pipe for transporting hydrocarbons, serving to convey, especially under water, a pressurized fluid, the pipe consisting of unbonded layers, these being partly metallic and/or made of composite material and partly polymeric,
**characterized in that** the tape (10) is formed from a central section (11) of approximately rectangular cross section and from two longitudinal edges (12) that are thinner than the central section.

2. The tape as claimed in claim 1, **characterized in that** the thickness of the longitudinal edges (12) is approximately equal to one half of the thickness of the central section (11).

3. The tape as claimed in either of the preceding claims, **characterized in that** the width of the edges (12) is between 5% and 15% of the width of the central section (11).

4. The tape as claimed in any one of the preceding claims, **characterized in that** the density of the tape is equal to or greater than 39%.

5. The tape as claimed in any one of the preceding claims, **characterized in that** it is formed from filament rovings held together by binding means and a thermoplastic bonding material.

6. The tape as claimed in any one of claims 1 to 5, **characterized in that** it is formed by a single thickness of filament rovings (14, 14') having different dimensions in the central part (11) and in the edges (12).

7. The tape as claimed in any one of claims 1 to 6, **characterized in that** the tape (10) is provided with a tracer (16) in the region of the boundary between the central part (11) and the edges (12).

8. A pipe for transporting hydrocarbons, used for conveying, especially under water, a pressurized fluid, the pipe consisting of unbonded layers, these being partly metallic and/or made of composites and partly polymeric, the pipe comprising at least one layer formed by a helical winding of a flat textile tape (10), **characterized in that** the tape (10) is formed from a central section (11) having an approximately rectangular cross section and from two longitudinal edges (12) that are thinner than the central section, the tape (10) being wound with at least partial overlapping of the lateral edges (12).

9. The pipe as claimed in claim 8, **characterized in that** the lay angle of the tapes (1) is typically greater than 70°, or even 80°.

10. The pipe as claimed in either of claims 8 and 9, **characterized in that** the edges (12) of the tape (10) are produced from fibers having physical or chemical characteristics different from those of the central part (11).

11. The pipe as claimed in any one of claims 8 to 10, which includes a pressure sheath (2) and a pressure vault (5), **characterized in that** the layer made from tape (10) is an anticreep layer wound between the pressure sheath (2) and the pressure vault (5) of the pipe (1).

12. The pipe as claimed in any one of claims 8 to 10, **characterized in that** the layer made from tape (10) is a reinforcing layer wound around an armor ply (109, 110) of the pipe or between the armor plies (109, 110).
